(19) Europäisches Patentamt / European Patent Office / Office européen des brevets

(11) **EP 2 826 310 B1**

(12) **EUROPEAN PATENT SPECIFICATION**

(45) Date of publication and mention
of the grant of the patent:
**31.10.2018 Bulletin 2018/44**

(51) Int Cl.:
**H04W 48/20** *(2009.01)*        **H04W 36/26** *(2009.01)*
**H04W 16/26** *(2009.01)*        **H04W 84/04** *(2009.01)*

(21) Application number: **12708142.0**

(22) Date of filing: **12.03.2012**

(86) International application number:
**PCT/EP2012/054289**

(87) International publication number:
**WO 2013/135269 (19.09.2013 Gazette 2013/38)**

(54) **PICO CELL-SELECTION / HANDOVER FOR TDM EICIC HETEROGENOUS NETWORKS**

PICOZELLAUSWAHL/-ÜBERGABE FÜR HETEROGENE TDM-EICIC-NETZWERKE

TRANSFERT/SÉLECTION DE PICO-CELLULE POUR RÉSEAUX HÉTÉROGÈNES TDM EICIC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.01.2015 Bulletin 2015/04**

(73) Proprietor: **Nokia Solutions and Networks Oy
02610 Espoo (FI)**

(72) Inventors:
• **PEDERSEN, Klaus, Ingemann
DK-9000 Aalborg (DK)**
• **SORET-ALVAREZ, Beatriz
DK-9000 Aalborg (DK)**

(74) Representative: **Nokia EPO representatives et al
Nokia Technologies Oy
Karaportti 3
02610 Espoo (FI)**

(56) References cited:
**WO-A1-2011/124013      US-A1- 2011 312 319**

• **NOKIA SIEMENS NETWORKS ET AL: "Aspects of Pico Node Range Extension", 3GPP DRAFT; R1-103824_PICO_RE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20100628, 22 June 2010 (2010-06-22), XP050449243, [retrieved on 2010-06-22]**
• **PANASONIC: "Simulation Results for Frequency Domain ICIC in HetNets - Macro and Pico Cells with Range Extension", 3GPP DRAFT; R1-105503 HETNET EICIC RESULTS FDM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Xi'an; 20101011, 5 October 2010 (2010-10-05), XP050450623, [retrieved on 2010-10-05]**
• **PANTECH: "Discussions on CRE bias", 3GPP DRAFT; R2-111293_DISCUSSIONS ON CRE BIAS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Taipei, Taiwan; 20110221, 15 February 2011 (2011-02-15), XP050493770, [retrieved on 2011-02-15]**

**Description**

Field of the invention

The present invention relates to an apparatus, a method, and a computer program product related to improving the handover and/or cell selection. More particularly, the present invention relates to an apparatus, a method, and a computer program product for improved handover and/or cell selection in heterogeneous networks.

Background of the invention

Abbreviations

| 3GPP | 3rd generation partnership project |
| ABS | Almost Blank Subframe |
| CRE | Cell Range Extension |
| eICIC | enhanced Inter-Cell Interference Coordination |
| eNB | Evolved Node B |
| LTE | Long Term Evolution |
| PUE | Pico User Equipment |
| RSRP | Reference Signal Received Power |
| RSRQ | Reference Signal Received Quality |
| TDM | Time Domain |
| TS | Technical specification |

Cell-selection / handover methods in heterogeneous networks (HetNet) with cochannel deployment of macro-eNBs and pico-eNBs, in particular with Time Domain (TDM) enhanced Inter-Cell Interference-Coordination (eICIC) may be improved.

In conventional macro-cell networks, UE cell selection / handover is typically based on UE measurements of Reference Signal Received Power (RSRP). However, applying this criterion to HetNets leads to a downlink imbalance problem: the coverage of the macro-cell is much larger than that of the pico-cell due to the difference in transmission power between both layers. However, the RSRP-based cell selection can be adapted to HetNets by adding a positive bias (Cell Range Extension CRE) to the received RSRP value in order to balance the load macro-pico. Thus, RSRP+CRE-based cell selection makes the UE to select the cell with highest RSRP+CRE value, where CRE is equal to zero for macro-cells and positive for pico-cells.

This is concept is addressed in the document entitled "Aspects of Pico Node Range Extension" by Nokia Siemens Networks et al., 3GPP DRAFT, R1-103824, 22 June 2010, XP050449243, which describes such pico node range extension concept, specifically considering the setting of CRE offsets for serving cell selection and system level performance.

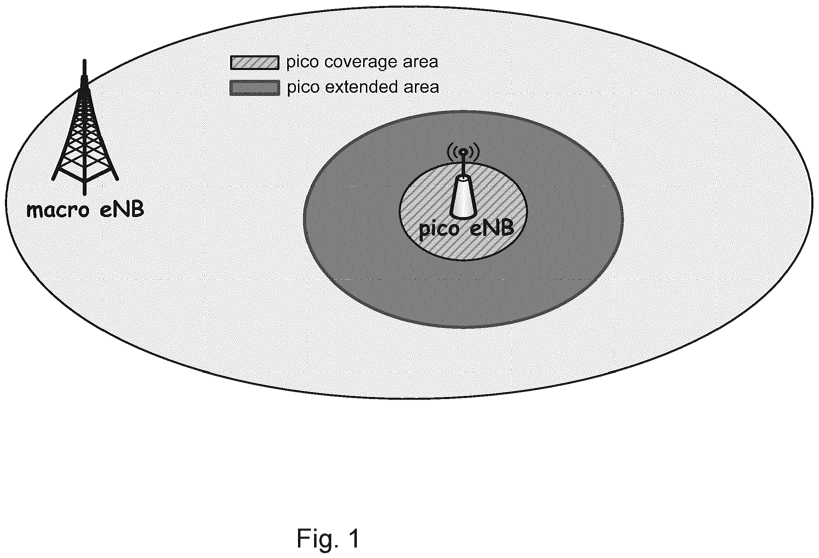

As shown in the baseline scenario in Figure 1, the footprint (coverage area) of the pico-cell is expanded by the application of the CRE offset. To protect victim pico UEs (PUEs = a UE served by the pico eNB) in the extended area from severe interference from macro layer, the macro eNB is prevented from transmitting on certain subframes, called Almost Blank Subframes (ABS).

Summary of the invention

It is an object of the present invention to improve the prior art.

According to the present invention, there are thus provided an apparatus, a method, and a computer program product, as defined the appended claims.

According to a first aspect of the present disclosure, there is provided an apparatus, comprising first cell range extension checking means adapted to check if a first received cell range extension received from a first cell is larger than 0; second cell range extension checking means adapted to check if a second received cell range extension received from a second cell is larger than 0, wherein the second cell is different from the first cell; setting means adapted to set, if both the first received cell range extension and the second received cell range extension are larger than 0, a first modified cell range extension based on the first received cell range extension and a second modified cell range extension based on the second received cell range extension, wherein for at least one combination of values of the first and second received cell range extensions at least one of the first and second modified cell range extensions is different from the respective received cell range extension, and to set, if at least one of the first received cell range extension and the second received cell range extension is equal to 0, the first modified cell range extension equal to the first received cell range extension and the second modified cell range extension equal to the second received cell range extension; selecting means adapted to select one of the first cell and the second cell for cell selection and/or handover based on a comparison of a sum of a first signal strength indicator from the first cell and the first modified cell range extension and a sum of a second signal strength indicator from the second cell and the second modified cell range extension.

The apparatus may further comprise attaching means adapted to attach the apparatus to the cell selected by the selecting means.

In the apparatus, the first and second signal strength indicators may be respective reference signal received powers or the first and second signal strength indicators may be respective reference signal received qualities.

In the apparatus, the setting means may be adapted to set, if both the first received cell range extension and the second received cell range extension are larger than 0, the first modified cell range extension and the second modified cell range extension such that an absolute value of a difference between the first modified cell range extension and the second modified cell range extension is not larger than a threshold.

The apparatus may further comprise comparing means adapted to compare which of the first received cell range extension and the second received cell range extension is the larger one; and the setting means may be adapted to set, if the first received cell range extension is not smaller than the second received cell range extension, the first modified cell range extension equal to the minimum among the first received cell range extension and a sum of the second received cell range extension and the threshold, and to set, if the first received cell range extension is smaller than the second received cell range extension, the second modified cell range extension equal to the minimum among the second received cell range extension and a sum of the first received cell range extension and the threshold.

In the apparatus, the threshold may be 0.

In the apparatus, the setting means may be adapted to set, if both the first received cell range extension and the second received cell range extension are larger than 0, the first modified cell range extension equal to a the first received cell range extension multiplied by a factor and the second modified cell range extension equal to the second received cell range extension multiplied by the factor, wherein the factor is less than 1.

According to a second aspect of the present disclosure, there is provided an apparatus, comprising first cell range extension checking processor adapted to check if a first received cell range extension received from a first cell is larger than 0; second cell range extension checking processor adapted to check if a second received cell range extension received from a second cell is larger than 0, wherein the second cell is different from the first cell; setting processor adapted to set, if both the first received cell range extension and the second received cell range extension are larger than 0, a first modified cell range extension based on the first received cell range extension and a second modified cell range extension based on the second received cell range extension, wherein for at least one combination of values of the first and second received cell range extensions at least one of the first and second modified cell range extensions is different from the respective received cell range extension, and to set, if at least one of the first received cell range extension and the second received cell range extension is equal to 0, the first modified cell range extension equal to the first received cell range extension and the second modified cell range extension equal to the second received cell range extension; selecting processor adapted to select one of the first cell and the second cell for cell selection and/or handover based on a comparison of a sum of a first signal strength indicator from the first cell and the first modified cell range extension and a sum of a second signal strength indicator from the second cell and the second modified cell range extension.

The apparatus may further comprise attaching processor adapted to attach the apparatus to the cell selected by the selecting processor.

In the apparatus, the first and second signal strength indicators may be respective reference signal received powers or the first and second signal strength indicators may be respective reference signal received qualities.

In the apparatus, the setting processor may be adapted to set, if both the first received cell range extension and the second received cell range extension are larger than 0, the first modified cell range extension and the second modified cell range extension such that an absolute value of a difference between the first modified cell range extension and the second modified cell range extension is not larger than a threshold.

The apparatus may further comprise comparing processor adapted to compare which of the first received cell range extension and the second received cell range extension is the larger one; and the setting processor may be adapted to set, if the first received cell range extension is not smaller than the second received cell range extension, the first modified cell range extension equal to the minimum among the first received cell range extension and a sum of the second received cell range extension and the threshold, and to set, if the first received cell range extension is smaller than the second received cell range extension, the second modified cell range extension equal to the minimum among the second received cell range extension and a sum of the first received cell range extension and the threshold.

In the apparatus, the threshold may be 0.

In the apparatus, the setting processor may be adapted to set, if both the first received cell range extension and the second received cell range extension are larger than 0, the first modified cell range extension equal to a the first received cell range extension multiplied by a factor and the second modified cell range extension equal to the second received cell range extension multiplied by the factor, wherein the factor is less than 1.

According to a third aspect of the present disclosure, there is provided a user equipment comprising an apparatus according to any of the first and second aspects.

According to one aspect of the present disclosure, there is provided a system, comprising an apparatus according to any of the first and second aspects; a first base station with the first cell; a second base station with the second cell; wherein the first base station transmits the first received cell range extension in the first cell and the second base station transmits the second received cell range extension in the second cell.

According to a fourth aspect of the present disclosure, there is provided a method, comprising checking if a first received cell range extension received from a first cell is larger than 0; checking if a second received cell range extension received from a second cell is larger than 0, wherein the second cell is different from the first cell; setting, if both the first received cell range extension and the second received cell range extension are larger than 0, a first modified cell range extension based on the first received cell range extension and a second modified cell range extension based on the second received cell range extension, wherein for at least one combination of values of the first and second received cell range extensions at least one of the first and second modified cell range extensions is different from the respective received cell range extension, setting, if at least one of the first received cell range extension and the second received cell range extension is equal to 0, the first modified cell range extension equal to the first received cell range extension and the second modified cell range extension equal to the second received cell range extension; and selecting one of the first cell and the second cell for cell selection and/or handover based on a comparison of a sum of a first signal strength indicator from the first cell and the first modified cell range extension and a sum of a second signal strength indicator from the second cell and the second modified cell range extension.

The method may be a method of cell selection and/or handover.

The method may further comprise attaching an apparatus performing the method to the selected cell.

In the method, the first and second signal strength indicators may be respective reference signal received powers or the first and second signal strength indicators may be respective reference signal received qualities.

In the method, if both the first received cell range extension and the second received cell range extension are larger than 0, the first modified cell range extension and the second modified cell range extension may be set such that an absolute value of a difference between the first modified cell range extension and the second modified cell range extension is not larger than a threshold.

The method may further comprise comparing which of the first received cell range extension and the second received cell range extension is the larger one; and, if the first received cell range extension is not smaller than the second received cell range extension, the first modified cell range extension may be set equal to the minimum among the first received cell range extension and a sum of the second received cell range extension and the threshold, and, if the first received cell range extension is smaller than the second received cell range extension, the second modified cell range extension may be set equal to the minimum among the second received cell range extension and a sum of the first received cell range extension and the threshold.

In the method, the threshold may be 0.

In the method, if both the first received cell range extension and the second received cell range extension are larger than 0, the first modified cell range extension may be set equal to a the first received cell range extension multiplied by a factor and the second modified cell range extension may be set equal to the second received cell range extension multiplied by the factor, wherein the factor is less than 1.

According to a fifth aspect of the present disclosure, there is provided a computer program product including a program comprising software code portions being arranged, when run on a processor of an apparatus, to perform the method according to the fourth aspect.

The computer program product may comprise a computer-readable medium on which the software code portions are stored, and/or the computer program product program may be directly loadable into a memory of the processor.

According to embodiments of the invention, at least the following advantages are achieved:

In an area where several cells with different (positive) CRE offsets (e.g. pico cells) may serve a UE, the CRE offsets used for cell selection/handover may be based on the received CREs but modified such that interference from other cells different from the serving one does not become too severe.

E.g., a difference between these modified CRE offsets may be limited to be not more than a threshold TH. A UE in this area is served by the NodeB with the strongest signal + modified CRE. Thus, interference impact is reduced and at the same time the load balance between eNBs is preserved. On the other hand, a preference of the pico NodeB (NodeB with positive CRE) over a NodeB of a higher hierarchy level such as a macro NodeB (NodeB with CRE = 0) is maintained for the UE.

In other embodiments, the modified CREs may be a fraction of the CREs. Thus, their influence on cell selection/handover is reduced and may not overwhelm the interference reduction required with respect to the non-serving cells.

It is to be understood that any of the above modifications can be applied singly or in combination to the respective aspects to which they refer, unless they are explicitly stated as excluding alternatives.

Brief description of the drawings

Further details, features, objects, and advantages are apparent from the following detailed description of the preferred embodiments of the present invention which is to be taken in conjunction with the appended drawings, wherein

Fig. 1 shows a heterogeneous network with a single pico eNB;

Fig. 2 shows a heterogeneous network with two pico eNB;

Fig. 3 shows an apparatus according to an embodiment of the invention;

Fig. 4 shows a method according to an embodiment of the invention;

Fig. 5 shows a method according to an embodiment of the invention; and

Fig. 6 shows a method according to an embodiment of the invention.

Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

According to 3GPP Rel 10, pico-cells may be configured with a CRE positive offset (bias). Different pico-cells may apply different CRE bias depending on their own capacities and load conditions.

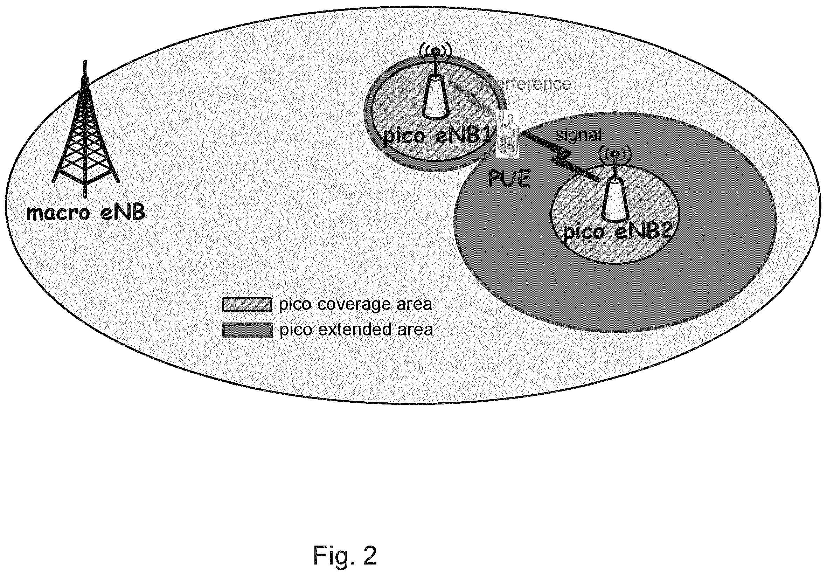

Figure 2 shows a network comprising a macro eNB and two pico eNBs (eNB1 and eNB2) with differently extended areas, and a PUE. Here, pico eNB1 is applying a small CRE offset, whereas pico eNB2 has been configured with a high value of CRE offset, leading to a much larger extended area. The PUE gets measures of the RSRP of the two cells, being $RSRP_{eNB1} > RSRP_{eNB2}$. Without CRE offset, the PUE would connect to pico eNB1. However, due to the imbalanced CRE offset between both pico cells, the PUE connects to pico eNB2.

TDM eICIC techniques (with the transmission of ABS) protect the PUE in the range extended area from macro interference. However, in the case of the PUE in Figure 2, the PUE is not protected from interference from pico eNB1 because pico cells are not muted (no ABS). Thus, the PUE will suffer interference from pico eNB1 and low signal strength from the serving pico eNB2 during the whole connection (if not moved to another location). This interference becomes more severe the more the difference between CRE offsets.

In order to overcome this problem, according to embodiments of the invention, the RSRP+CRE-based cell selection / handover for the case of pico-cells is adapted. In detail, the CRE offsets used in the cell-selection/handover may be modified based on the received CREs when the two candidates (in case of handover: the serving cell and a candidate for handover) are pico-cells applying positive bias. E.g., the maximum difference $CRE_{eNB1} - CRE_{eNB2}$ may be limited to be at maximum TH. TH may be expressed in dB. Notice that the case TH=0dB corresponds to the traditional RSRP-based cell selection applied in homogeneous networks.

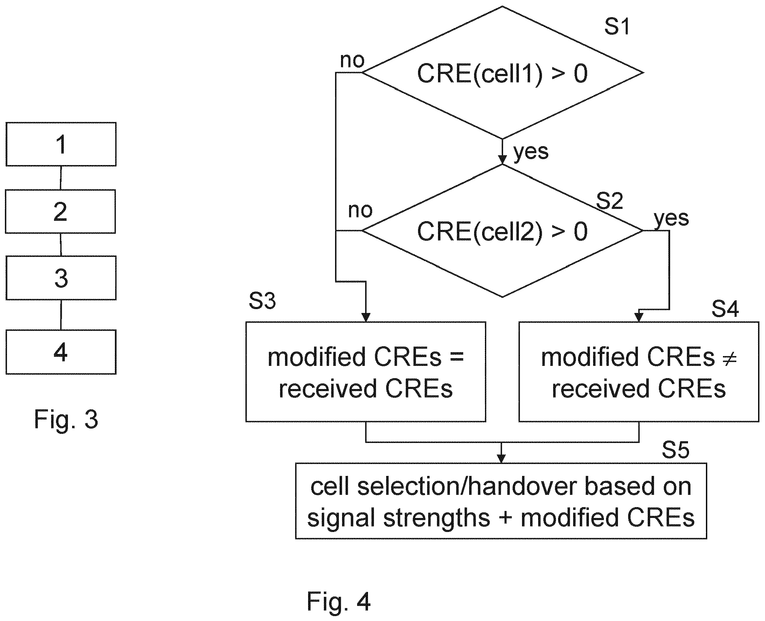

Fig. 3 shows an apparatus according to an embodiment of the invention. The apparatus may be a user equipment. The apparatus according to Fig. 3 may perform the method of Fig. 4 but is not limited to this method. The method of Fig. 4 may be performed by the apparatus of Fig. 3 but is not limited to being performed by this apparatus.

The apparatus comprises first cell range extension checking means 1, second cell range extension checking means 2, modifying means 3, and selecting means 4.

The first and second cell range extension checking means 1 and 2 check if the first and second cell range extensions received from the first and second cell, respectively, are larger than 0 (S1, S2).

If both of them are larger than 0, it is assumed that both cells are pico cells (or other cells with a positive CRE). In this case, first and modified CREs are set by the setting means 3 based on the respective received CREs (S4). For at least one combination of values, at least one of the first and second modified CREs is different from the respective received CRE.

On the other hand, if at least one of the received CREs is equal to 0, the first and second modified CREs are set by the setting means 3 equal to the respective received CREs (S3).

The selecting means 4 selects one of the first and second cells for cell selection/handover based on a sum of a respective received signal strength from these cells and the respective modified CRE (S5). Parameters for signal strength may be e.g. RSRP and/or RSRQ.

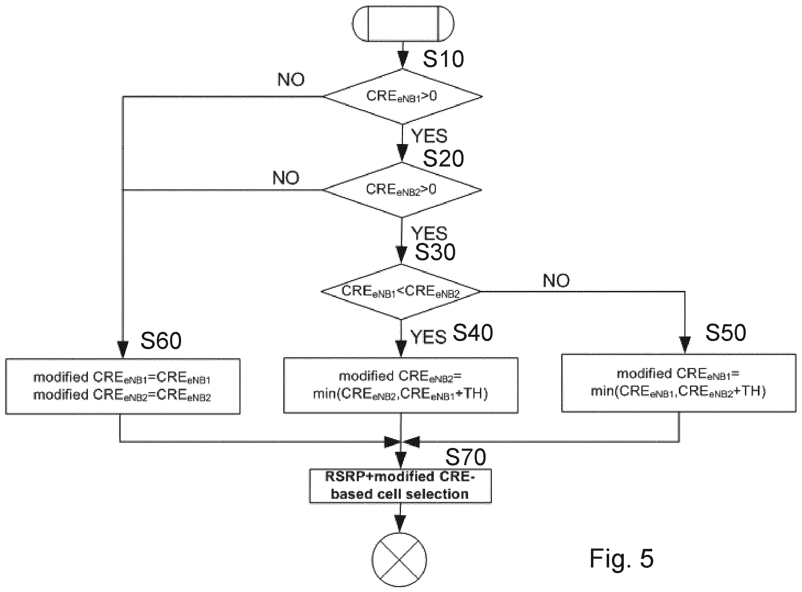

Figure 5 shows a flow diagram of a particular cell-selection / handover method according to an embodiment of the invention. The modified method may be performed by an apparatus as according to Fig. 3. Fig. 5, shows an exemplary embodiment, according to which an absolute value of a difference between the modified CRE values is limited to a threshold.

According to step S10, it is evaluated if the CRE received from eNodeB1 is larger than 0. If not, i.e. if it is 0 (no in step S10), the CRE offsets are not modified for cell selection/handover, i.e. the modified CRE offsets are the same as the received CRE offset (S60).

Otherwise, if CRE of eNodeB1 is larger than 0 (yes in step S10), according to step S20, it is it is evaluated if the CRE of eNodeb2 is larger than 0. If not, i.e. if it is 0 (no in step S20), the CRE offsets are not modified for cell selection/handover, i.e. the modified CRE offsets are the same as the received CRE offset (S60).

Otherwise, if CRE of eNodeB2 is larger than 0 (yes in step S20), according to step S30 it is evaluated if the received CRE of eNodeB1 is smaller than the received CRE of eNodeB2. If not (no in step S30), according to step S50 the modified CRE offset of eNodeB1 is set to the minimum between the received CRE of eNodeB1 and the received CRE of eNodeB2 + TH, wherein TH is a predefined threshold value.

Otherwise, if the received CRE of eNodeB1 is smaller than the received CRE of eNodeB2 (yes in step S30), according to step S40 the modified CRE offset of eNodeB2 is set to the minimum between the received CRE of eNodeB2 and the received CRE of eNodeB1+TH.

The cell selection/handover is performed based on the modified CRE offsets (S70).

Note that the first condition to be fulfilled in order to set the modified CREs different from the received CREs is that the received CREs of both cells are positive (i.e. it is not a cell selection / handover involving a macro cell or a pico-cell with not configured CRE).

Limiting the maximum difference of modified CRE values on which the cell selection/handover is based has the following effect: if the signal from a first pico cell is stronger than that of a second pico cell by more than the threshold TH, the first pico cell will always be selected. Thus, the interference problem is strongly mitigated and at the same time the load balancing function is preserved. On the other hand, if the difference is less than the threshold TH, the selection will be based on RSRP + (modified) CRE, wherein the modified CRE is the same as the unmodified CRE. Thus, the intended preference according to the CRE settings will be preserved in an area where the interference problem is not too severe.

The same effect may be achieved if the difference of the first and second received CREs is evaluated and, if it is larger than the threshold TH, the modified CREs are set such that the larger one of the CREs is equal to the sum of the smaller one of the received CREs plus the threshold TH.

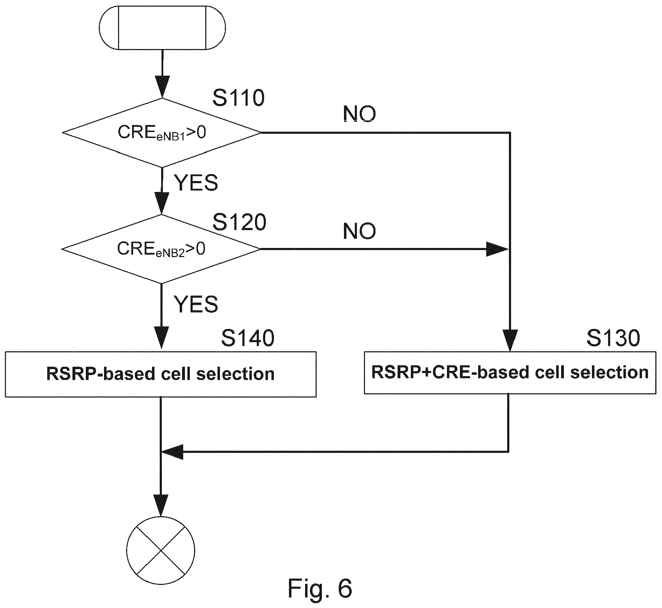

If the threshold TH is set equal to 0, cell selection/handover between two cells with positive CRE will be performed as if no CRE would be considered at all. In a variant of the method of Fig. 5 for this case, both modified CREs are set to 0, which corresponds to performing cell selection/handover based on signal strength (e.g. RSRP) only (see Fig. 6).

Another way to enhance the priority of interference mitigation over the priorities of cell selection expressed by positive CREs is basing the decision on cell selection/handover on modified CREs, which are obtained by multiplying the received CREs with a factor less than 1.

In order to implement embodiments of the invention, 3GPP TS 36.331 should be modified. Conventionally, the measurement event A3 is used in the UE for cell selection. Currently, event A3 is defined as follows (3GPP TS 36.331 v10.3.0):

**Event A3 (Neighbour becomes offset better than PCell)**

The UE shall:

1> consider the entering condition for this event to be satisfied when condition A3-1, as specified below, is fulfilled;
1> consider the leaving condition for this event to be satisfied when condition A3-2, as specified below, is fulfilled;

NOTE The cell(s) that triggers the event is on the frequency indicated in the associated *measObject* which may be different from the (primary) frequency used by the PCell.

Inequality A3-1 (Entering condition)

$$Mn + Ofn + Ocn - Hys > Mp + Ofp + Ocp + Off$$

Inequality A3-2 (Leaving condition)

$$Mn + Ofn + Ocn + Hys < Mp + Ofp + Ocp + Off$$

The variables in the formula are defined as follows:

*Mn* is the measurement result of the neighbouring cell, not taking into account any offsets.

*Ofn* is the frequency specific offset of the frequency of the neighbour cell (i.e. *offsetFreq* as defined within *measObjectEUTRA* corresponding to the frequency of the neighbour cell).

*Ocn* is the cell specific offset of the neighbour cell (i.e. *cellIndividualOffset* as defined within *measObjectEUTRA* corresponding to the frequency of the neighbour cell), and set to zero if not configured for the neighbour cell.

*Mp* is the measurement result of the PCell, not taking into account any offsets.

*Ofp* is the frequency specific offset of the primary frequency (i.e. *offsetFreq* as defined within *measObjectEUTRA* corresponding to the primary frequency).

*Ocp* is the cell specific offset of the PCell (i.e. *cellIndividualOffset* as defined within *measObjectEUTRA* corresponding to the primary frequency), and is set to zero if not configured for the PCell.

*Hys* is the hysteresis parameter for this event (i.e. *hysteresis* as defined within *reportConfigEUTRA* for this event).

*Off* is the offset parameter for this event (i.e. *a3-Offset* as defined within *reportConfigEUTRA* for this event).

*Mn, Mp* are expressed in dBm in case of RSRP, or in dB in case of RSRQ.

*Ofn, Ocn, Ofp, Ocp, Hys, Off* are expressed in dB.

Here, **Ocn** is the CRE of the neighbour cell and **Ocp** the CRE of the serving cell (PCell). The CRE of each cell in the list of candidates is configured in the field *cellIndividualOffset* of the associated *measObject*.

According to embodiments of the invention, event A3 is modified as follows (exemplarily shown for the method of Fig. 5; changes underlined):

**Event A3 (Neighbour becomes offset better than PCell)**

The UE shall:

1> consider the entering condition for this event to be satisfied when condition A3-1, as specified below, is fulfilled;

1> consider the leaving condition for this event to be satisfied when condition A3-2, as specified below, is fulfilled;

NOTE The cell(s) that triggers the event is on the frequency indicated in the associated *measObject* which may be different from the (primary) frequency used by the PCell.

Inequality A3-1 (Entering condition)

$$Mn + Ofn + Ocn - Hys > Mp + Ofp + Ocp + Off$$

Inequality A3-2 (Leaving condition)

$$Mn + Ofn + Ocn + Hys < Mp + Ofp + Ocp + Off$$

The variables in the formula are defined as follows:

**Mn** is the measurement result of the neighbouring cell, not taking into account any offsets.

**Ofn** is the frequency specific offset of the frequency of the neighbour cell (i.e. *offsetFreq* as defined within *measObjectEUTRA* corresponding to the frequency of the neighbour cell).

**Ocn** is the cell specific offset of the neighbour cell (i.e. *cellIndividualOffset* as defined within *measObjectEUTRA* corresponding to the frequency of the neighbour cell), set to zero if not configured for the neighbour cell, and set to min(cellIndividualOffset of the neighbour cell, cellIndividualOffset of the Pcell +TH) if cellIndividualOffset of the neighbour cell > 0, cellIndividualOffset of the PCell >0 and cellIndividualOffset of the PCell < cellIndividualOffset of the neighbour cell.

**Mp** is the measurement result of the PCell, not taking into account any offsets.

**Ofp** is the frequency specific offset of the primary frequency (i.e. *offsetFreq* as defined within *measObjectEUTRA* corresponding to the primary frequency).

**Ocp** is the cell specific offset of the PCell (i.e. *cellIndividualOffset* as defined within *measObjectEUTRA* corresponding to the primary frequency), is set to zero if not configured for the PCell, and set to min(cellIndividualOffset of the PCell, cellIndividualOffset of the neighbour cell +TH) if cellIndividualOffset of the neighbour cell > 0, cellIndividualOffset of the PCell >0 and cellIndividualOffset of the PCell > cellIndividualOffset of the neighbour cell.

**Hys** is the hysteresis parameter for this event (i.e. *hysteresis* as defined within *reportConfigEUTRA* for this event).

**Off** is the offset parameter for this event (i.e. *a3-Offset* as defined within *reportConfigEUTRA* for this event).

**Mn, Mp** are expressed in dBm in case of RSRP, or in dB in case of RSRQ.

***TH is the maximum difference between cell specific offsets of the PCell and the neighbour cell***

**Ofn, Ocn, Ofp, Ocp, Hys, Off,** TH are expressed in dB.

Alternatively, embodiments of the invention may be implemented as a new event in addition to event A3.

Embodiments of the invention are described with respect to macro eNB and pico eNB. However, embodiments of the invention may be applied to any kind of base stations where a cell range extension (CRE) is applied. In particular, embodiments of the invention may be applied to homogeneous networks, too.

Embodiments of the invention are described with respect to 3GPP Rel. 10. However, embodiments of the invention may be applied to any radio technology comprising cell selection based on a cell range extension, in particular any other 3GPP release.

Embodiments of the invention are described for two NodeBs which may potentially serve the user equipment. However, in embodiments of the invention, more than two NodeBs may potentially serve the user equipment. In this case, the selection process is performed between the serving cell (in case of handover) or a first candidate cell (in case of cell selection) and each of the candidate cells separately, e.g. in decreasing order of RSRP, according to the above described embodiments of the invention.

Embodiments of the invention are described with RSRP as a criterion for cell selection and/or handover. However, other signal strength indicators than RSRP, e.g. RSRQ, may be used instead.

A UE may be a user equipment, a terminal, a mobile phone, a laptop, a smartphone, a tablet PC, or any other device that may attach to the mobile network. A base station may be a NodeB, an eNodeB or any other base station of a radio network.

If not otherwise stated or otherwise made clear from the context, the statement that two entities are different means that they are differently addressed in their respective network. It does not necessarily mean that they are based on different hardware. That is, each of the entities described in the present description may be based on a different hardware, or some or all of the entities may be based on the same hardware.

According to the above description, it should thus be apparent that exemplary embodiments of the present invention provide, for example a user equipment apparatus such as a UE, or a component thereof, an apparatus embodying the same, a method for controlling and/or operating the same, and computer program(s) controlling and/or operating the same as well as mediums carrying such computer program(s) and forming computer program product(s).

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

**Claims**

1. Apparatus, comprising
   first cell range extension checking means (1) adapted to check if a first received cell range extension offset received from a first cell is larger than 0;
   second cell range extension checking means (2) adapted to check if a second received cell range extension offset received from a second cell is larger than 0, wherein the second cell is different from the first cell;
   setting means (3) adapted

   to set, if both the first received cell range extension offset and the second received cell range extension offset are larger than 0, a first modified cell range extension offset based on the first received cell range extension offset and a second modified cell range extension offset based on the second received cell range extension offset, wherein for at least one combination of values of the first and second received cell range extension offsets at least one of the first and second modified cell range extension offsets is different from the respective received cell range extension offset, and
   to set, if at least one of the first received cell range extension offset and the second received cell range extension offset is equal to 0, the first modified cell range extension offset equal to the first received cell range extension offset and the second modified cell range extension offset equal to the second received cell range extension offset;

   selecting means (4) adapted to select one of the first cell and the second cell for cell selection and/or handover based on a comparison of a sum of a first signal strength indicator from the first cell and the first modified cell range extension offset and a sum of a second signal strength indicator from the second cell and the second modified cell range extension offset.

2. The apparatus according to claim 1, further comprising
   attaching means adapted to attach the apparatus to the cell selected by the selecting means.

3. The apparatus according to any of claims 1 and 2, wherein the first and second signal strength indicators are respective reference signal received powers or wherein the first and second signal strength indicators are respective reference signal received qualities.

4. The apparatus according to any of claims 1 to 3, wherein the setting means (3) is adapted to set, if both the first received cell range extension offset and the second received cell range extension offset are larger than 0, the first modified cell range extension offset and the second modified cell range extension offset such that an absolute value of a difference between the first modified cell range extension offset and the second modified cell range extension offset is not larger than a threshold.

5. The apparatus according claim 4, further comprising comparing means adapted to compare which of the first received cell range extension offset and the second received cell range extension offset is the larger one; and wherein
   the setting means (3) is adapted to set, if the first received cell range extension offset is not smaller than the second received cell range extension offset, the first modified cell range extension offset equal to the minimum among the first received cell range extension offset and a sum of the second received cell range extension offset and the threshold, and to set, if the first received cell range extension offset is smaller than the second received cell range extension offset, the second modified cell range extension offset equal to the minimum among the second received cell range extension offset and a sum of the first received cell range extension offset and the threshold.

6. The apparatus according to any of claims 4 and 5, wherein the threshold is 0.

7. The apparatus according to any of claims 1 to 3, wherein the setting means (3) is adapted to set, if both the first received cell range extension offset and the second received cell range extension offset are larger than 0, the first modified cell range extension offset equal to the first received cell range extension offset multiplied by a factor and the second modified cell range extension offset equal to the second received cell range extension offset multiplied by the factor, wherein the factor is less than 1.

8. User equipment comprising an apparatus according to any of claims 1 to 7.

9. Method, comprising
checking (S1; S10; S110) if a first received cell range extension offset received from a first cell is larger than 0;
checking (S2; S20; S120) if a second received cell range extension offset received from a second cell is larger than 0, wherein the second cell is different from the first cell;
setting (S4; S40, S50), if both the first received cell range extension offset and the second received cell range extension offset are larger than 0, a first modified cell range extension offset based on the first received cell range extension offset and a second modified cell range extension offset based on the second received cell range extension offset, wherein for at least one combination of values of the first and second received cell range extension offsets at least one of the first and second modified cell range extension offsets is different from the respective received cell range extension offset,
setting (S3; S60), if at least one of the first received cell range extension offset and the second received cell range extension offset is equal to 0, the first modified cell range extension offset equal to the first received cell range extension offset and the second modified cell range extension offset equal to the second received cell range extension offset; and
selecting (S5; S70; S130, S140) one of the first cell and the second cell for cell selection and/or handover based on a comparison of a sum of a first signal strength indicator from the first cell and the first modified cell range extension offset and a sum of a second signal strength indicator from the second cell and the second modified cell range extension offset.

10. The method according to claim 9, further comprising attaching an apparatus performing the method to the selected cell.

11. The method according to any of claims 9 and 10, wherein the first and second signal strength indicators are respective reference signal received powers or wherein the first and second signal strength indicators are respective reference signal received qualities.

12. The method according to any of claims 9 to 11, wherein, if both the first received cell range extension offset and the second received cell range extension offset are larger than 0, the first modified cell range extension offset and the second modified cell range extension offset are set such that an absolute value of a difference between the first modified cell range extension offset and the second modified cell range extension offset is not larger than a threshold.

13. The method according claim 12, further comprising comparing which of the first received cell range extension offset and the second received cell range extension offset is the larger one; and wherein, if the first received cell range extension offset is not smaller than the second received cell range extension offset, the first modified cell range extension offset is set equal to the minimum among the first received cell range extension offset and a sum of the second received cell range extension offset and the threshold (S50), and, if the first received cell range extension offset is smaller than the second received cell range extension offset, the second modified cell range extension offset is set equal to the minimum among the second received cell range extension offset and a sum of the first received cell range extension offset and the threshold (S60).

14. The method according to any of claims 9 to 11, wherein, if both the first received cell range extension offset and the second received cell range extension offset are larger than 0, the first modified cell range extension offset is set equal to the first received cell range extension offset multiplied by a factor and the second modified cell range extension offset is set equal to the second received cell range extension offset multiplied by the factor, wherein the factor is less than 1.

15. A computer program product including a program comprising software code portions being arranged, when run on a processor of an apparatus, to perform the method according to any one of claims 9 to 14.

**Patentansprüche**

1. Vorrichtung, umfassend:

   ein erstes Zellenreichweitenerweiterung-Prüfmittel (1), das ausgelegt ist zum Prüfen, ob ein erster empfangener Zellenreichweitenerweiterungsoffset, der von einer ersten Zelle empfangen wird, größer als 0 ist;
   ein zweites Zellenreichweitenerweiterung-Prüfmittel (2), das ausgelegt ist zum Prüfen, ob ein zweiter empfangener Zellenreichweitenerweiterungsoffset, der von einer zweiten Zelle empfangen wird, größer als 0 ist, wobei sich die zweite Zelle von der ersten Zelle unterscheidet;
   ein Einstellmittel (3), das ausgelegt ist zum Einstellen, falls sowohl der erste empfangene Zellenreichweitenerweiterungsoffset als auch der zweite empfangene Zellenreichweitenerweiterungsoffset größer als 0 sind, eines ersten modifizierten Zellenreichweitenerweiterungsoffsets basierend auf dem ersten empfangenen Zellenreichweitenerweiterungsoffset und eines zweiten modifizierten Zellenreichweitenerweiterungsoffsets basierend auf dem zweiten empfangenen Zellenreichweitenerweiterungsoffset, wobei für mindestens eine Kombination von Werten des ersten und zweiten empfangenen Zellenreichweitenerweiterungsoffsets sich der erste und/oder zweite modifizierte Zellenreichweitenerweiterungsoffset vom jeweiligen empfangenen Zellenreichweitenerweiterungsoffset unterscheidet bzw. unterscheiden, und Einstellen, falls der erste empfangene Zellenreichweitenerweiterungsoffset und/oder der zweite empfangene Zellenreichweitenerweiterungsoffset gleich 0 ist bzw. sind, des ersten modifizierten Zellenreichweitenerweiterungsoffsets gleich dem ersten empfangenen Zellenreichweitenerweiterungsoffset und des zweiten modifizierten Zellenreichweitenerweiterungsoffsets gleich dem zweiten empfangenen Zellenreichweitenerweiterungsoffset;
   ein Auswahlmittel (4), das ausgelegt ist zum Auswählen entweder der ersten Zelle oder der zweiten Zelle zur Zellenauswahl und/oder zum Zellen-Handover basierend auf einem Vergleich einer Summe eines ersten Signalstärkenindikators von der ersten Zelle und des ersten modifizierten Zellenreichweitenerweiterungsoffsets und einer Summe eines zweiten Signalstärkenindikators von der zweiten Zelle und des zweiten modifizierten Zellenreichweitenerweiterungsoffsets.

2. Vorrichtung nach Anspruch 1, ferner umfassend: ein Anschlussmittel, das ausgelegt ist zum Anschließen der Vorrichtung an die durch das Auswahlmittel ausgewählte Zelle.

3. Vorrichtung nach einem der Ansprüche 1 und 2, wobei der erste und zweite Signalstärkenindikator jeweilige Referenzsignalempfangsleistungen sind oder wobei der erste und zweite Signalstärkenindikator jeweilige Referenzsignalempfangsqualitäten sind.

4. Vorrichtung nach einem der Ansprüche 1 bis 3, wobei das Einstellmittel (3) ausgelegt ist zum Einstellen, falls sowohl der erste empfangene Zellenreichweitenerweiterungsoffset als auch der zweite empfangene Zellenreichweitenerweiterungsoffset größer als 0 sind, des ersten modifizierten Zellenreichweitenerweiterungsoffsets und des zweiten modifizierten Zellenreichweitenerweiterungsoffsets, sodass ein absoluter Wert einer Differenz zwischen dem ersten modifizierten Zellenreichweitenerweiterungsoffset und dem zweiten modifizierten Zellenreichweitenerweiterungsoffset nicht größer als eine Schwelle ist.

5. Vorrichtung nach Anspruch 4, ferner umfassend:

   ein Vergleichsmittel, das ausgelegt ist zum Vergleichen, welcher des ersten empfangenen Zellenreichweitenerweiterungsoffsets und des zweiten empfangenen Zellenreichweitenerweiterungsoffsets der größere ist; und wobei
   das Einstellmittel (3) ausgelegt ist zum Einstellen, falls der erste empfangene Zellenreichweitenerweiterungsoffset nicht kleiner ist als der zweite empfangene Zellenreichweitenerweiterungsoffset, des ersten modifizierten Zellenreichweitenerweiterungsoffsets gleich dem Minimum unter dem ersten empfangenen Zellenreichweitenerweiterungsoffset und einer Summe des zweiten empfangenen Zellenreichweitenerweiterungsoffsets und der Schwelle und zum Einstellen, falls der erste empfangene Zellenreichweitenerweiterungsoffset kleiner ist als der zweite empfangene Zellenreichweitenerweiterungsoffset, des zweiten modifizierten Zellenreichweitenerweiterungsoffsets gleich dem Minimum unter dem zweiten empfangenen Zellenreichweitenerweiterungsoffset und einer Summe des ersten empfangenen Zellenreichweitenerweiterungsoffsets und der Schwelle.

6. Vorrichtung nach einem der Ansprüche 4 und 5, wobei die Schwelle 0 beträgt.

7. Vorrichtung nach einem der Ansprüche 1 bis 3, wobei das Einstellmittel (3) ausgelegt ist zum Einstellen, falls sowohl der erste empfangene Zellenreichweitenerweiterungsoffset als auch der zweite empfangene Zellenreichweitenerweiterungsoffset größer als 0 sind, des ersten modifizierten Zellenreichweitenerweiterungsoffsets gleich dem ersten empfangenen Zellenreichweitenerweiterungsoffset multipliziert mit einem Faktor und des zweiten modifizierten Zellenreichweitenerweiterungsoffsets gleich dem zweiten empfangenen Zellenreichweitenerweiterungsoffset multipliziert mit dem Faktor, wobei der Faktor geringer als 1 ist.

8. Benutzergerät, das eine Vorrichtung nach einem der Ansprüche 1 bis 7 umfasst.

9. Verfahren, umfassend:

Prüfen (S1; S10; S110), ob ein erster empfangener Zellenreichweitenerweiterungsoffset, der von einer ersten Zelle empfangen wird, größer als 0 ist;
Prüfen (S2; S20; S120), ob ein zweiter empfangener Zellenreichweitenerweiterungsoffset, der von einer zweiten Zelle empfangen wird, größer als 0 ist, wobei sich die zweite Zelle von der ersten Zelle unterscheidet;
Einstellen (S4; S40, S50), falls sowohl der erste empfangene Zellenreichweitenerweiterungsoffset als auch der zweite empfangene Zellenreichweitenerweiterungsoffset größer als 0 sind, eines ersten modifizierten Zellenreichweitenerweiterungsoffsets basierend auf dem ersten empfangenen Zellenreichweitenerweiterungsoffset und eines zweiten modifizierten Zellenreichweitenerweiterungsoffsets basierend auf dem zweiten empfangenen Zellenreichweitenerweiterungsoffset, wobei für mindestens eine Kombination von Werten des ersten und zweiten empfangenen Zellenreichweitenerweiterungsoffsets sich der erste und/oder zweite modifizierte Zellenreichweitenerweiterungsoffset vom jeweiligen empfangenen Zellenreichweitenerweiterungsoffset unterscheidet bzw. unterscheiden,
Einstellen (S3; S60), falls der erste empfangene Zellenreichweitenerweiterungsoffset und/oder der zweite empfangene Zellenreichweitenerweiterungsoffset gleich 0 ist bzw. sind, des ersten modifizierten Zellenreichweitenerweiterungsoffsets gleich dem ersten empfangenen Zellenreichweitenerweiterungsoffset und des zweiten modifizierten Zellenreichweitenerweiterungsoffsets gleich dem zweiten empfangenen Zellenreichweitenerweiterungsoffset; und
Auswählen (S5; S70; S130, S140) entweder der ersten oder der zweiten Zelle zur Zellenneuauswahl und/oder zum Zellen-Handover basierend auf einem Vergleich einer Summe eines ersten Signalstärkenindikators von der ersten Zelle und des ersten modifizierten Zellenreichweitenerweiterungsoffsets und einer Summe eines zweiten Signalstärkenindikators von der zweiten Zelle und des zweiten modifizierten Zellenreichweitenerweiterungsoffsets.

10. Verfahren nach Anspruch 9, ferner umfassend: Anschließen einer Vorrichtung, die das Verfahren ausführt, an der ausgewählten Zelle.

11. Verfahren nach einem der Ansprüche 9 und 10, wobei der erste und zweite Signalstärkenindikator jeweilige Referenzsignalempfangsleistungen sind oder wobei der erste und zweite Signalstärkenindikator jeweilige Referenzsignalempfangsqualitäten sind.

12. Verfahren nach einem der Ansprüche 9 bis 11, wobei, falls sowohl der erste empfangene Zellenreichweitenerweiterungsoffset als auch der zweite empfangene Zellenreichweitenerweiterungsoffset größer als 0 sind, der erste modifizierte Zellenreichweitenerweiterungsoffset und der zweite modifizierte Zellenreichweitenerweiterungsoffset derart eingestellt werden, dass ein absoluter Wert einer Differenz zwischen dem ersten modifizierten Zellenreichweitenerweiterungsoffset und dem zweiten modifizierten Zellenreichweitenerweiterungsoffset nicht größer als eine Schwelle ist.

13. Verfahren nach Anspruch 12, ferner umfassend:

Vergleichen, welcher des ersten empfangenen Zellenreichweitenerweiterungsoffsets und des zweiten empfangenen Zellenreichweitenerweiterungsoffsets der größere ist; und wobei,
falls der erste empfangene Zellenreichweitenerweiterungsoffset nicht kleiner ist als der zweite empfangene Zellenreichweitenerweiterungsoffset, der erste modifizierte Zellenreichweitenerweiterungsoffset gleich dem Minimum unter dem ersten empfangenen Zellenreichweitenerweiterungsoffset und einer Summe des zweiten empfangenen Zellenreichweitenerweiterungsoffsets und der Schwelle eingestellt wird (S50), und falls der erste empfangene Zellenreichweitenerweiterungsoffset kleiner ist als der zweite empfangene Zellenreichweitenerweiterungsoffset, der zweite modifizierte Zellenreichweitenerweiterungsoffset gleich dem Minimum unter dem zweiten empfangenen Zellenreichweitenerweiterungsoffset und einer Summe des ersten empfangenen Zellenreichweitenerweiterungsoffsets und der Schwelle eingestellt wird (S60).

**14.** Verfahren nach einem der Ansprüche 9 bis 11, wobei, falls sowohl der erste empfangene Zellenreichweitenerweiterungsoffset als auch der zweite empfangene Zellenreichweitenerweiterungsoffset größer als 0 sind, der erste modifizierte Zellenreichweitenerweiterungsoffset gleich dem ersten empfangenen Zellenreichweitenerweiterungsoffset multipliziert mit einem Faktor eingestellt wird und der zweite modifizierte Zellenreichweitenerweiterungsoffset gleich dem zweiten empfangenen Zellenreichweitenerweiterungsoffset multipliziert mit dem Faktor eingestellt wird, wobei der Faktor geringer als 1 ist.

**15.** Computerprogrammprodukt, das ein Programm beinhaltet, das Softwarecodeteile umfasst, die, wenn sie auf einem Prozessor einer Vorrichtung ausgeführt werden, dazu eingerichtet sind, das Verfahren nach einem der Ansprüche 9 bis 14 durchzuführen.


## Revendications

**1.** Appareil comprenant :

un premier moyen de vérification d'extension de portée de cellule (1) conçu pour vérifier si un premier décalage d'extension de portée de cellule reçu qui est reçu d'une première cellule est supérieur à 0 ;
un second moyen de vérification d'extension de portée de cellule (2) conçu pour vérifier si un second décalage d'extension de portée de cellule reçu qui est reçu d'une seconde cellule est supérieur à 0, dans lequel la seconde cellule est différente de la première cellule ;
un moyen de réglage (3) conçu
pour régler, si à la fois le premier décalage d'extension de portée de cellule reçu et le second décalage d'extension de portée de cellule reçu sont supérieurs à 0, un premier décalage d'extension de portée de cellule modifié basé sur le premier décalage d'extension de portée de cellule reçu et un second décalage d'extension de portée de cellule modifié basé sur le second décalage d'extension de portée de cellule reçu, dans lequel, pour au moins une combinaison de valeurs des premier et second décalages d'extension de portée de cellule reçus, au moins l'un des premier et second décalages d'extension de portée de cellule modifiés est différent du décalage d'extension de portée de cellule reçu respectif, et
pour régler, si au moins l'un du premier décalage d'extension de portée de cellule reçu et du second décalage d'extension de portée de cellule reçu est égal à 0, le premier décalage d'extension de portée de cellule modifié de sorte qu'il soit égal au premier décalage d'extension de portée de cellule reçu et le second décalage d'extension de portée de cellule modifié de sorte qu'il soit égal au second décalage d'extension de portée de cellule reçu ;
un moyen de sélection (4) conçu pour sélectionner soit la première cellule, soit la seconde cellule pour une sélection de cellule et/ou un transfert de cellule en se basant sur une comparaison d'une somme d'un premier indicateur d'intensité de signal provenant de la première cellule et du premier décalage d'extension de portée de cellule modifié et d'une somme d'un second indicateur d'intensité de signal provenant de la seconde cellule et du second décalage d'extension de portée de cellule modifié.

**2.** Appareil selon la revendication 1, comprenant en outre
un moyen de fixation conçu pour fixer l'appareil à la cellule sélectionnée par le moyen de sélection.

**3.** Appareil selon l'une quelconque des revendications 1 et 2, dans lequel les premier et second indicateurs d'intensité de signal sont des puissances reçues de signal de référence respectives ou dans lequel les premier et second indicateurs d'intensité de signal sont des qualités reçues de signal de référence respectives.

**4.** Appareil selon l'une quelconque des revendications 1 à 3, dans lequel le moyen de réglage (3) est conçu pour régler, si à la fois le premier décalage d'extension de portée de cellule reçu et le second décalage d'extension de portée de cellule reçu sont supérieurs à 0, le premier décalage d'extension de portée de cellule modifié et le second décalage d'extension de portée de cellule modifié de telle sorte qu'une valeur absolue d'une différence entre le premier décalage d'extension de portée de cellule modifié et le second décalage d'extension de portée de cellule modifié ne soit pas supérieure à un seuil.

**5.** Appareil selon la revendication 4, comprenant en outre
un moyen de comparaison conçu pour comparer lequel du premier décalage d'extension de portée de cellule reçu et du second décalage d'extension de portée de cellule reçu est le plus important ; et dans lequel
le moyen de réglage (3) est conçu pour régler, si le premier décalage d'extension de portée de cellule reçu est supérieur ou égal au second décalage d'extension de portée de cellule reçu, le premier décalage d'extension de portée de cellule modifié de sorte qu'il soit égal au minimum entre le premier décalage d'extension de portée de cellule reçu et une somme du second décalage d'extension de portée de cellule reçu et du seuil, et pour régler, si le premier décalage d'extension de portée de cellule reçu est inférieur au second décalage d'extension de portée de cellule reçu, le second décalage d'extension de portée de cellule modifié de sorte qu'il soit égal au minimum entre le second décalage d'extension de portée de cellule reçu et une somme du premier décalage d'extension de portée de cellule reçu et du seuil.

6. Appareil selon l'une quelconque des revendications 4 et 5, dans lequel le seuil est 0.

7. Appareil selon l'une quelconque des revendications 1 à 3, dans lequel le moyen de réglage (3) est conçu pour régler, si à la fois le premier décalage d'extension de portée de cellule reçu et le second décalage d'extension de portée de cellule reçu sont supérieurs à 0, le premier décalage d'extension de portée de cellule modifié de sorte qu'il soit égal au premier décalage d'extension de portée de cellule reçu multiplié par un facteur et le second décalage d'extension de portée de cellule modifié de sorte qu'il soit égal au second décalage d'extension de portée de cellule reçu multiplié par le facteur, dans lequel le facteur est inférieur à 1.

8. Équipement utilisateur comprenant un appareil selon l'une quelconque des revendications 1 à 7.

9. Procédé comprenant
le fait de vérifier (S1 ; S10 ; S110) si un premier décalage d'extension de portée de cellule reçu qui est reçu d'une première cellule est supérieur à 0 ;
le fait de vérifier (S2 ; S20 ; S120) si un second décalage d'extension de portée de cellule reçu qui est reçu d'une seconde cellule est supérieur à 0, dans lequel la seconde cellule est différente de la première cellule ;
le réglage (S4 ; S40 ; S50), si à la fois le premier décalage d'extension de portée de cellule reçu et le second décalage d'extension de portée de cellule reçu sont supérieurs à 0, d'un premier décalage d'extension de portée de cellule modifié basé sur le premier décalage d'extension de portée de cellule reçu et d'un second décalage d'extension de portée de cellule modifié basé sur le second décalage d'extension de portée de cellule reçu, dans lequel, pour au moins une combinaison de valeurs des premier et second décalages d'extension de portée de cellule reçus, au moins l'un des premier et second décalages d'extension de portée de cellule modifiés est différent du décalage d'extension de portée de cellule reçu respectif,
le réglage (S3 ; S60), si au moins l'un du premier décalage d'extension de portée de cellule reçu et du second décalage d'extension de portée de cellule reçu est égal à 0, du premier décalage d'extension de portée de cellule modifié de sorte qu'il soit égal au premier décalage d'extension de portée de cellule reçu et du second décalage d'extension de portée de cellule modifié de sorte qu'il soit égal au second décalage d'extension de portée de cellule reçu ; et la sélection (S5 ; S70 ; S130 ; S140) soit de la première cellule, soit de la seconde cellule pour une sélection de cellule et/ou un transfert de cellule en se basant sur une comparaison d'une somme d'un premier indicateur d'intensité de signal provenant de la première cellule et du premier décalage d'extension de portée de cellule modifié et d'une somme d'un second indicateur d'intensité de signal provenant de la seconde cellule et du second décalage d'extension de portée de cellule modifié.

10. Procédé selon la revendication 9, comprenant en outre
la fixation d'un appareil réalisant le procédé à la cellule sélectionnée.

11. Procédé selon l'une quelconque des revendications 9 et 10, dans lequel les premier et second indicateurs d'intensité de signal sont des puissances reçues de signal de référence respectives ou dans lequel les premier et second indicateurs d'intensité de signal sont des qualités reçues de signal de référence respectives.

12. Procédé selon l'une quelconque des revendications 9 à 11, dans lequel, si à la fois le premier décalage d'extension de portée de cellule reçu et le second décalage d'extension de portée de cellule reçu sont supérieurs à 0, le premier décalage d'extension de portée de cellule modifié et le second décalage d'extension de portée de cellule modifié sont réglés de telle sorte qu'une valeur absolue d'une différence entre le premier décalage d'extension de portée de cellule modifié et le second décalage d'extension de portée de cellule modifié ne soit pas supérieure à un seuil.

13. Procédé selon la revendication 12, comprenant en outre
la comparaison pour savoir lequel du premier décalage d'extension de portée de cellule reçu et du second décalage d'extension de portée de cellule reçu est le plus important ; et dans lequel
si le premier décalage d'extension de portée de cellule reçu est supérieur ou égal au second décalage d'extension de portée de cellule reçu, le premier décalage d'extension de portée de cellule modifié est réglé de sorte à être égal au minimum entre le premier décalage d'extension de portée de cellule reçu et une somme du second décalage d'extension de portée de cellule reçu et du seuil (S50), et, si le premier décalage d'extension de portée de cellule reçu est inférieur au second décalage d'extension de portée de cellule reçu, le second décalage d'extension de portée de cellule modifié est réglé de sorte à être égal au minimum entre le second décalage d'extension de portée de cellule reçu et une somme du premier décalage d'extension de portée de cellule reçu et du seuil (S60).

14. Procédé selon l'une quelconque des revendications 9 à 11, dans lequel, si à la fois le premier décalage d'extension de portée de cellule reçu et le second décalage d'extension de portée de cellule reçu sont supérieurs à 0, le premier décalage d'extension de portée de cellule modifié est réglé de sorte à être égal au premier décalage d'extension de portée de cellule reçu multiplié par un facteur et le second décalage d'extension de portée de cellule modifié est réglé de sorte à être égal au second décalage d'extension de portée de cellule reçu multiplié par le facteur, dans lequel le facteur est inférieur à 1.

15. Produit-programme d'ordinateur comprenant un programme comprenant des parties de code de logiciel qui sont conçues, lorsqu'elles s'exécutent sur un processeur d'un appareil, pour réaliser le procédé selon l'une quelconque des revendications 9 à 14.

Fig. 1

**Fig. 2**

S1

CRE(cell1) > 0

yes

no

S2

CRE(cell2) > 0

yes

no

S4

modified CREs ≠ received CREs

S3

modified CREs = received CREs

S5

cell selection/handover based on signal strengths + modified CREs

Fig. 4

1 — 2 — 3 — 4

Fig. 3

S10

NO  $CRE_{eNB1}>0$

YES

S20

NO  $CRE_{eNB2}>0$

YES

S30

$CRE_{eNB1}<CRE_{eNB2}$  NO

YES S40

S50

S60

modified $CRE_{eNB1}=CRE_{eNB1}$
modified $CRE_{eNB2}=CRE_{eNB2}$

modified $CRE_{eNB2}=$
$min(CRE_{eNB2}, CRE_{eNB1}+TH)$

modified $CRE_{eNB1}=$
$min(CRE_{eNB1}, CRE_{eNB2}+TH)$

S70

**RSRP+modified CRE-based cell selection**

Fig. 5

EP 2 826 310 B1

18

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOKIA SIEMENS NETWORKS et al.** Aspects of Pico Node Range Extension. *3GPP DRAFT, R1-103824,* 22 June 2010